(19) Europäisches Patentamt

European Patent Office

Office européen des brevets

(11) **EP 0 654 223 B1**

(12) **EUROPEAN PATENT SPECIFICATION**

(45) Date of publication and mention
of the grant of the patent:
**07.03.2001 Bulletin 2001/10**

(51) Int Cl.7: **A23L 1/31**

(21) Application number: **94308675.1**

(22) Date of filing: **23.11.1994**

(54) **A snack product and method for preparing same**

Knabberartikel sowie Verfahren zu seiner Herstellung

Amuse-gueule et son procédé de fabrication

(84) Designated Contracting States:
**AT BE CH DE DK ES FR GB GR IE IT LI NL PT SE**

(30) Priority: **23.11.1993 GB 9324092**

(43) Date of publication of application:
**24.05.1995 Bulletin 1995/21**

(73) Proprietors:
• **UNILEVER PLC**
**London EC4P 4BQ (GB)**
Designated Contracting States:
**GB IE**
• **UNILEVER N.V.**
**3013 AL Rotterdam (NL)**
Designated Contracting States:
**BE CH DE DK ES FR GR IT LI NL PT SE AT**

(72) Inventor: **Scott, Glenda Lesley**
**c/o Unilever Res.Colworth Lab**
**Bedford,MK44 1LQ (GB)**

(74) Representative: **Sikken, Antonius H. J. M. et al**
**UNILEVER N.V.,**
**Patent Division,**
**P.O. Box 137**
**3130 AC Vlaardingen (NL)**

(56) References cited:
**EP-A- 0 012 255** **DE-A- 3 538 805**
**DE-A- 3 630 131** **GB-A- 1 579 324**
**US-A- 4 152 463** **US-A- 4 330 562**
**US-A- 4 889 730** **US-A- 5 059 433**

## Description

### Field of the Invention

This invention relates to an ambient stable food product, especially a hand held ready-to-eat snack product, characterised by the presence of fat,a low Aw and a low pH.

### Background of the Invention

The traditional eating pattern of the developed world consists three meals that are taken at regular intervals throughout the day. However the pattern is changing as people supplement or replace one or more of these main meals with another, usually light meal, at their convenience or pleasure.

These light meals or snacks are generally intended to be consumed almost immediately, that is without any cooking or other method of preparation, and as they are often bought on impulse, taste is paramount.

The problem encountered by researchers in this field is to prepare a product that contains a perishable food such as chicken but which remains stable at ambient temperature for convenience of storage. Micro-organisms thrive in moist conditions at room temperature which is why foods such as chicken, which has a water activity of about 0.98, must be frozen if it is to be stored for prolonged periods. Methods of preserving food include decreasing its pH and / or drying but the final product can be at best, unsuitable for a tasty convenience food and at worst, simply unpalatable.

DE 3,538,805 describes a snack on a stick containing at least one edible binder, standard additives such as kernels, nuts, fruits, cereals as well as flavouring and aromatising agents. The snack food can be made ready-to-eat by dry-heating and is either after-dried to a water activity value below 0.9, especially below 0.8, or stored as a deep-frozen article.

GB-A-1 579 324 discloses pet-food, containing meat or other proteinaceous material and having a water content of 24-45 wt.% and a pH of 4-7, while also a cross-linked algiante is present.

EP-A-0 012 255 discloses pasteurized food products, having Aw-values of 0.86-091 and a pH of 4.5-5.5. Although example 4 defines a vegetable tart which can be fried, this product only contains limited amounts of fat (about 11 wt.%).

The present inventor has developed a tasty, ambient stable, snack food product and method for preparing same that overcomes at least some of the difficulties described above. The superior ambient stability of the product is believed to be a result of the combination of suitable Aw and suitable pH, the stability being particularly surprising when the product contains a perishable protein.

### Definition of the Invention

According to the present invention there is provided a snack product comprising a particulate material, fat and a binding material, wherein the snack product comprises 20-50 wt% (on succk product) of fat and wherein the water activity (Aw) of the product is less than 0.94 and the pH is between 4 and 6.5.

Preferably the Aw is between 0.4 and 0.9, and the pH is between 5 and 6. Preferably the snack product also contains at least one flavour component.

According to the present invention there is also provided a method for preparing an ambient stable snack product comprising mixing and moulding a particulate material, a fat and a binding material, wherein the water activity (Aw) of the product is less than 0.94 and the pH is between 4 and 6.5.

Preferably the particulate material and the binding material are mixed with at least one flavouring component and at least one fat component prior to being moulded, and then cooked, or alternatively cooking can be done prior to mixing.

The product will be dry and crunchy if water is removed and glucose syrup is added, or moist if a pasteurisation step is added.

Preferably the snack products are packed in aluminium foil pouches which have been flushed with nitrogen.

### Description of the Invention

The invention will now be described in detail with reference to the following schematic drawings that accompany this specification.

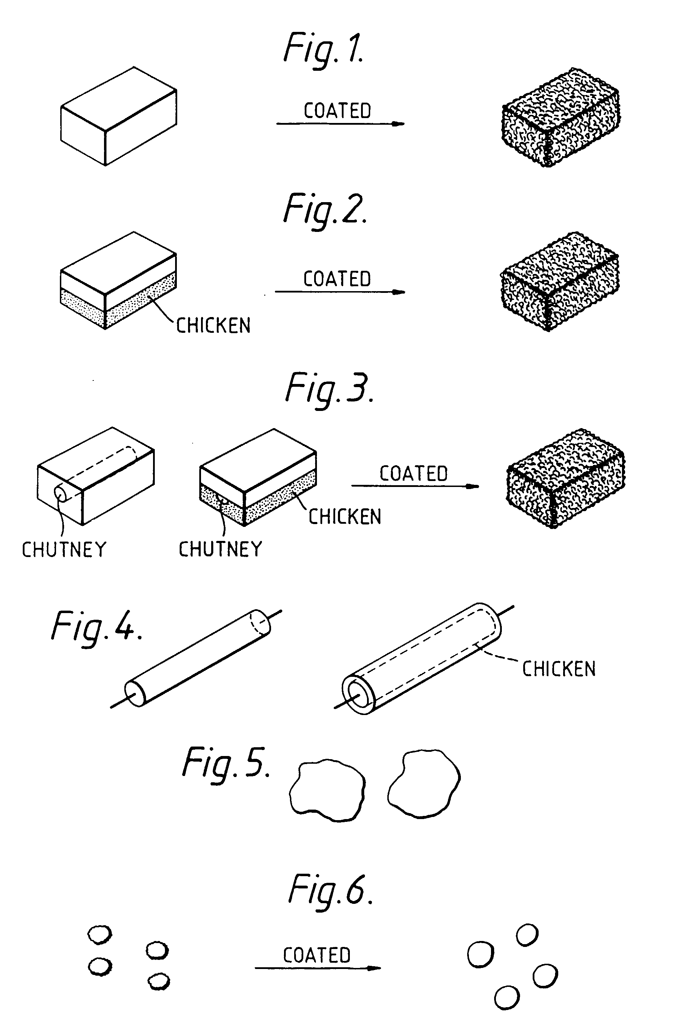

Figure 1 depicts a snack product of the invention comprising a coated bar.

Figure 2 depicts a snack product of the invention comprising a bar having a layer of chicken and a layer of coconut, coated with a savoury couverture.

Figure 3 depicts the two snack products shown in Figures 1 and 2 but with chutney filling.

Figure 4 depicts two cylindrically shaped snack products of the invention, the second of which having a chicken filling.

Figure 5 depicts a snack product of the invention in the form of nuggets.

Figure 6 depicts a snack product of the invention in the form of substantially spherical nuggets.

It should be noted that the snack products referred to above are illustrated and described for the purpose of providing a complete disclosure of the invention and is in no way intended to limit the scope of the monopoly sought which is defined in the accompanying claims.

The snack product of the present invention in its most basic form comprises a particulate material, a fat and a binding material, wherein the fat content of the product is 20-50 wt% and the water activity (Aw) of the product is less than 0.94 (but especially between 0.4 and 0.9) and the pH is between 4 and 6.5 (but especially between 5 and 6). It has been found that those properties provide for the product to remain stable at ambient temperature for a prolonged period of time and thus is suited as a hand held food product that is intended to be able to be consumed immediately after purchase, whereas the product also displayed a good malt in the month moist texture. The particulate material can take many forms. It may for example comprise, contain or be prepared from the meat of mammals, fish and poultry, which is preferably comminuted and which may have been subjected to pre-treatments, such as smoking, drying, marinading, and the like; carbohydrates, like various flours, gums and the like; vegetable proteins; like soybean protein; fungal proteins, like mycoprotein; caseinates, like alkali metal caseinates; animal proteins, like milk protein; vegetables, like red peppers, carrot and cabbage; dairy products, like cheese and yoghurt; egg material; fruits, herbs spices; flavouring agents, particularly savoury flavouring agents; emulsifiers, like fatty acid lactylates, lecithin and the like; stabilizers, like gums, dressings, like ketchups, sauces, mayonnaise, and the like, and mixtures thereof. Preferred particulate material can be prepared from chicken, creamed coconut, desiccated coconut, sunflower seeds, flour, mango, onion, butter, satay, barbecue, sweet and sour, chili, or curry powder.

The binding material can take many forms. For example it may be egg albumin; a carbohydrate binder such as various flours, gums, glucose syrup; modified starches such as Zorbit; gels; thickeners; stabilised protein; and mixtures thereof.

The snack product of the invention preferably also contains at least one flavouring component. The choice of such components will be well known to one skilled in the art but may include the meat of mammals, fish and poultry, which is preferably comminuted and which may have been subjected to pre-treatments, such as smoking, drying, marinading, and the like; carbohydrates, like various flours, gums and the like; vegetable proteins; like soybean protein; fungal proteins, like mycoprotein; caseinates, like alkali metal caseinates; animal proteins, like milk protein; vegetables, like red peppers, carrot and cabbage; dairy products, like cheese and yoghurt; egg material; fruits, herbs spices; flavouring agents, particularly savoury flavouring agents; emulsifiers, like fatty acid lactylates, lecithin and the like; stabilizers, like gums dressings, like ketchups, sauces, mayonnaise, and the like; flavouring precursors, which form flavours under the conditions of preparing the coating material; fats and oils and fat substitutes, which may be the same as or different from those in the tubular material; colouring agents; anti-oxidants; fibres, like pea flour; minerals; vitamins and mixtures thereof. Preferred flavouring components include chicken, creamed coconut, desiccated coconut, sunflower seeds, flour, mango, onion, butter, satay, barbecue, sweet and sour, chili, curry powder, or indeed any natural or synthetic flavoured substance.

The snack product of the invention also contains 20-50 wt% of at least one fat component. Typically suitable fat components are of vegetable or animal origin and may be synthetic fat. It may be a single fat or fat fraction or a mixture of fats and/or fat fractions. At least part of the fat may be replaced by a low-calorie fat replacer. Particularly suitable fat replacers are the edible polyesters of polyhydric alcohols having at least four free hydroxyl groups, such as polyglycerols, sugars, or sugar alcohols, and saturated or unsaturated, straight or branched alkyl chain $C_8$-$C_{24}$ fatty acids. The polyhydric alcohol fatty acid polyesters include any such polyesters or mixtures thereof of which, on an average, at least 70% of the polyhydric alcohol hydroxyl groups have been esterified with the fatty acids. Also fatty alkyl ether derivatives of glycerol esters of $C_8$-$C_{24}$ fatty alcohols and polycarboxylic acids, waxes and microcrystalline cellulose can be used for replacing at least part of the fat. The fat content of the snack product is 20-50 wt% preferably 35-50%, to give the product a "melt in the mouth" moist texture.

The product will be dry and crunchy if water is removed and glucose syrup is added, or moist if a pasteurisation step is added.

The ambient stable snack product of the invention in its most basic form can be prepared by mixing the particulate material to an even consistency and then moulding the material into the desired shape. However a preferred method of preparing more complex snack products of the invention is as follows:

1. Prepare the binding material for mixing, for example mince raw chicken ( -4°C) or melt butter. If desired and appropriate the binding material can be cooked and/or dried until a weight loss of about 20-25% is achieved;

2. Mix the flavour component, the fat component, and the binding material along with any desired additional in-

EP 0 654 223 B1

gredients. The product can be varied from a very dry crunchy bar (by removing water and adding glucose syrup) to a moist bar ( by adding a pasteurisation step, for example at 90°C for 30 min ) ;

3. Mould the mixture by any suitable art known means, for example using a hydraulic ram to pressing it into bar shaped moulds;

4. Cook the mixture at 80°C until a weight loss of up to 50%, preferably between 15% to 25%, or especially about 20% is achieved; and

5. Remove the snack product from the moulds.

If desired the snack product can be packed in an aluminium foil pouch which is flushed with nitrogen. The snack product may also be pasteurised at this stage at 90°C for 30 mins if required.

The snack product of the present invention could take many forms. Possible formats include a bar, a kebab on a stick, spheres, and nuggets - which could be accompanied by a dip such as chutney.

The snack product, particularly the dry form, can be coated by appropriate art-known means with any desired coating, for example nuts, dried fruits or a savoury "chocolate" couverture made using suitable flavours (eg curry) or colours. Such a couverture gives a good adhesion mix for adding a further material such as BOMBAY MIX (a spicy nut and cereal mixture) thus making a crunchy coating. Typically suitable coatings may also be prepared from material based on starch or flour in the form of a dough, preferably a pasta dough, which is based on one or more of semolina, farina or flour and water, but which may also contain other types of starches or flours, such as different flours, gums, and the like material.

The coating material may also comprise vegetable protein, like soybean protein; animal proteins; like meat and milk protein; fungal proteins, like mycoprotein; caseinate, like alkali metal caseinate; vegetables, like red peppers, parsley, onion and carrot, which at the same time may impart a certain colour to the tubular material; stabilizers, like gums; dairy products, like cheese material; egg material, like egg yolk; fruit; herbs; spices, like garlic; flavouring agents, particularly savoury flavouring agents; flavouring precursors, which form flavours under the conditions of preparing the tubular coating material; emulsifiers, like lecithin and fatty acid monoglycerides; fats, which also may be fat fractions or fat substitutes; oils; colouring agents; anti-oxidants, preferably those prepared from spice extracts, like rosemary extract or tea material; fibre material, like pea flour; minerals, like phosphates and common salt; vitamins and mixtures of these materials.

The snack product of the invention can consist of two or more layers, and/or encapsulate another food material such as gelled chutney layer to make the product more moist and give contrast. Chicken, for example, can be removed from the mix and made as a single ambient stable layer or freeze dried to give a crunchier layer.

## EXAMPLE 1

The following is a formulation and method for preparing a snack bar of the invention. The percentages are given on a by weight basis.

| Ingredients | % |
| --- | --- |
| Unsalted butter | 3.42 |
| Onion Flakes | 3.44 |
| Mango Flakes | 3.44 |
| Garlic puree | 0.90 |
| Sate paste | 10.00 |
| Peanut butter | 10.00 |
| SILVER QUEEN Flour | 3.44 |
| KNORR Chicken Stock Cube | 1.60 |
| Creamed Coconut | 12.00 |
| NAT. STARCH ZORBIT | 1.90 |
| Desiccated Coconut | 6.90 |
| Egg Albumin powder | 1.30 |
| Cooked breast chicken | 34.00 |
| Sunflower Seeds | 7.66 |

(continued)

| Ingredients | % |
|---|---|
| Total | 100.00 |

Method

Raw chicken is minced (-4°C) then cooked in a shallow wide pan until a 20-25% weight loss has ben achieved. Alternatively, a chicken breast is cooked in an oven at 150 °C, then diced. All of the ingredients are mixed together, placed in moulds and pressed to a pressure of 820 kg using a 40 mm diameter hydraulic ram. The mixture is then removed from the moulds and cooked at 80°C until a further 20% weight loss has been achieved. The resulting product is finally packed in aluminium foil pouches, gas flushed with nitrogen, and preferably pasteurised at 90°C for 30 minutes.

## EXAMPLE 2

The following is a formulation and method for preparing a moist snack product of the invention and a dry snack product of the invention. The percentages are given on a by weight basis.

| Ingredients | Moist Prod. (%) | Dry Prod. (%) |
|---|---|---|
| Unsalted butter | 3.42 | 3.74 |
| Onion Flakes | 3.44 | 3.77 |
| Mango Flakes | 3.44 | 3.77 |
| Garlic puree | 0.90 | 0.93 |
| Curry powder | 1.76 | 1.89 |
| SILVER QUEEN Flour | 3.44 | 3.77 |
| Tomato puree | 1.80 | 1.89 |
| KNORR Chicken Stock Cube | 1.60 | 1.79 |
| Creamed Coconut | 17.20 | 18.85 |
| NAT.STARCH ZORBIT | 0.90 | 1.00 |
| Desiccated Coconut | 6.90 | 7.54 |
| Egg Albumen powder | 0.90 | 1.00 |
| Cooked breast chicken | 30.50 | 33.43 |
| Sunflower Seeds | 6.5 | 7.18 |
| Water | 17.30 | - |
| Glucose Syrup | - | 9.45 |
| Total | 100.00 | 10.00 |
| Aw | 0.82 | 0.60 |
| pH | 5.45 | 5.45 |
| Addition of 0.2% citric ac. → | 5.00 | 5.00 |

Snack products of the invention were prepared from the above formulations as follows: Raw chicken was minced at -4°C then cooked in shallow wide pan until 20-25% weight loss was achieved. All of the ingredients listed above were mixed together then the mixture was placed into moulds and pressed to a pressure of 820 kg using a 40 mm diameter hydraulic ram. The compressed mixture was then cooked at 80°C until a 20% weight loss was achieved to give snack products of the invention which were packed in aluminium foil pouches, gas flushed with nitrogen and finally pasteurised at 90°C for 30 mins.

## Claims

1. An ambient stable snack product comprising a particulate material, fat and a binding material characterised in that the snack product comprises 20-50 wt% (on snack-product) of fat and that the water activity (Aw) of the product is less than 0.94 and the pH is between 4 and 6.5.

2. A snack product according to claim 1, wherein the water activity (Aw) of the product is between 0.4 and 0.9 and the pH is between 5 and 6.

3. A Snack product according to claim 1, wherein sufficient water has been removed and glucose syrup added such that the product is substantially dry and crunchy.

4. A Snack product according to claim 1, wherein the product has been sufficiently pasteurised so that the product is substantially moist and chewy.

5. A snack product according to claim 1, wherein the particulate material comprises or contains meat, creamed coconut, desiccated coconut, sunflower seeds, flour, mango, onion, butter, satay, barbecue, sweet and sour, chili, or curry powder and the binding material comprises egg albumin; a carbohydrate binder such as various flours, gums, glucose syrup; modified starches such as Zorbit; gels; thickeners; stabilised protein; and mixtures thereof.

6. A snack product according to claim 1, further comprising at least one flavouring component.

7. A method for preparing an ambient stable snack product comprising mixing and moulding a particulate material, a fat and a binding material, wherein the product has a fat-content of 20-50 wt% (on snack-product) and a water activity (Aw) of less than 0.94 and a pH between 4 and 6.5.

8. A method according to claim 7 for preparing an ambient stable snack product comprising mixing a flavouring component, a fat component, a particulate material and a binding material, optionnally after having heated and/or dried the binding material until achieving a 20-25% weight loss placing the mixture in a mould, cooking the mixture until achieving a weight loss of up to 50% and removing the snack product from the mould, wherein the snack product obtained has a fat content of 20-50 wt% a water activity (Aw) of less than 0.94 and a pH between 4 and 6.5.

9. A method according to claim 8, wherein water is removed and sufficient glucose syrup added so that the product is dry and crunchy.

10. A method according to claim 8, further including a pasteurisation step to cause the product to be moist and chewy.

11. An ambient stable snack product when prepared by the method of any one of claims 7 to 10.


**Patentansprüche**

1. Bei Umgebungsbedingungen stabiles Knabberprodukt, umfassend ein feinteiliges Material, Fett und ein Bindematerial, dadurch gekennzeichnet, daß das Knabberprodukt 20 bis 50 Gew.-% (bezogen auf das Knabberprodukt) eines Fettes umfaßt, und daß die Wasseraktivität (Aw) des Produktes kleiner als 0,94 ist und der pH zwischen 4 und 6,5 liegt.

2. Knabberprodukt nach Anspruch 1, in welchem die Wasseraktivität (Aw) des Produktes zwischen 0,4 und 0,9 liegt und der pH zwischen 5 und 6 liegt.

3. Knabberprodukt nach Anspruch 1, in welchem ausreichend Wasser entfernt und Glucosesirup zugefügt worden sind, so daß das Produkt im wesentlichen trocken und knusprig ist.

4. Knabberprodukt nach Anspruch 1, in welchem das Produkt ausreichend pasteurisiert worden ist, so daß das Produkt im wesentlichen feucht und kaubar ist.

5. Knabberprodukt nach Anspruch 1, in welchem das feinteilige Material Fleisch, gecremte Kokosnuß, getrocknete Kokosnuß, Sonnenblumensamen, Mehl, Mango, Zwiebel, Butter, Satay, Barbecue, Süß- und Saueres, Chili- oder Currypulver umfaßt oder enthält, und das Bindematerial Eialbumin, ein Kohlehydrat-Bindemittel, wie verschiedene Mehle, Gummis, Glucosesirup; modifizierte Stärken, wie Sorbit; Gele; Verdickungsmittel; stabilisiertes Protein und Mischungen davon umfaßt.

6. Knabberprodukt nach Anspruch 1, das ferner mindestens eine aromatisierende Komponente umfaßt.

**7.** Verfahren zur Herstellung eines bei Umgebungsbedingung stabilen Knabberproduktes, umfassend das Mischen und Formen eines feinteiligen Materials, eines Fettes und eines Bindematerials, worin das Produkt einen Fettgehalt von 20 bis 50 Gew.-% (bezogen auf das Knabberprodukt) hat, eine Wasseraktivität (Aw) von weniger als 0,94 aufweist und einen pH zwischen 4 und 6,5.

**8.** Verfahren nach Anspruch 7 zur Herstellung eines bei Umgebungsbedingungen stabilen Knabberproduktes, umfassend das Mischen einer aromatisierenden Komponente, einer Fettkomponente, eines feinteiligen Materials und eines Bindematerials, fakultativ nach dem Erhitzen und/oder Trocknen des Bindematerials, bis zum Erreichen eines Gewichtsverlustes von 20 bis 25%, Einführen der Mischung in eine Form, Kochen der Mischung zur Erzielung eines Gewichtsverlustes bis zu 50% und Entfernen des Knabberproduktes aus der Form, worin das erhaltene Knabberprodukt einen Fettgehalt von 20 bis 50 Gew.-%, eine Wasseraktivität (Aw) von weniger als 0,94 und einen pH zwischen 4 und 6,5 aufweist.

**9.** Verfahren nach Anspruch 8, in welchem Wasser entfernt und ausreichend Glucosesirup zugefügt werden, so daß das Produkt trocken und knusprig ist.

**10.** Verfahren nach Anspruch 8, das ferner einen Pasteurisationsschritt einschließt, damit das Produkt feucht und kaubar wird.

**11.** Bei Umgebungsbedingungen stabiles Knabberprodukt, hergestellt nach dem Verfahren nach irgendeinem der Ansprüche 7 bis 10.

**Revendications**

**1.** Amuse-gueule stable à la température ambiante comprenant une matière particulaire, de la graisse, et une matière liante, caractérisé en ce que l'amuse-gueule comprend 20 à 50% en poids basé sur l'amuse gueule de graisse et en ce que l'activité d'eau (Ae) du produit est inférieure à 0,94 et le pH est entre 4 et 6,5.

**2.** Amuse-gueule selon la revendication 1, dans lequel l'activité d'eau (Ae) du produit est entre 0,4 et 0,9 et le pH est entre 5 et 6.

**3.** Amuse-gueule selon la revendication 1, dans lequel on enlève suffisamment d'eau et on ajoute suffisamment de sirop de glucose pour que le produit soit sensiblement sec et croquant.

**4.** Amuse-gueule selon la revendication 1, dans lequel on pasteurise suffisamment le produit pour que le produit soit sensiblement humide et masticable.

**5.** Amuse-gueule selon la revendication 1, dans lequel la matière particulaire comprend ou contient de la viande, de la noix de coco en crème, de la noix de coco déshydratée, des graines de tournesol, de la farine, de la mangue, de l'oignon, du beurre, du satay, une préparation pour barbecue, un agent édulcorant ou d'acidité, du piment ou du curry en poudre et le liant comprend l'albumine d'oeuf, un hydrate de carbone comme diverses farines, des gommes, du sirop de glucose, des amidons modifiés comme ZORBIT, des gels, des épaississants, une protéine stabilisée et leurs mélanges.

**6.** Amuse-gueule selon la revendication 1, comprenant de plus au moins un composant aromatisant.

**7.** Procédé de préparation d'un amuse-gueule stable à température ambiante comprenant le mélange et le moulage d'une matière particulaire, d'une graisse et d'un liant, dans lequel le produit a une teneur en graisse de 20 à 50% en poids et une activité d'eau (Ae) de moins de 0,94 et un pH entre 4 et 6,5.

**8.** Procédé selon la revendication 7, pour préparer un amuse-gueule stable à température ambiante comprenant le mélange d'un composant aromatisant, un composant gras, une matière particulaire et un liant, après avoir facultativement chauffé et/ou séché le liant jusqu'à réalisation d'une perte pondérale de 20 à 25% en poids, le moulage du mélange, la cuisson du mélange jusqu'à réaliser une perte pondérale jusqu'à 50% et le démoulage de l'amuse-gueule, dans lequel l'amuse-gueule obtenu a une teneur en graisse de 20 à 50% en poids, une activité d'eau (Ae) de moins de 0,94 et un pH entre 4 et 6,5.

9. Procédé selon la revendication 8, dans lequel on enlève suffisamment d'eau et on ajoute suffisamment de sirop de glucose pour que le produit soit sec et croquant.

10. Procédé selon la revendication 8, comportant de plus un stade de pasteurisation pour que le produit soit humide et masticable.

11. Amuse-gueule stable à température ambiante quand on le prépare par le procédé selon l'une quelconque des revendications 7 à 10.

*Fig.1.*

COATED →

*Fig.2.*

CHICKEN

COATED →

*Fig.3.*

CHUTNEY   CHUTNEY   CHICKEN

COATED →

*Fig.4.*

CHICKEN

*Fig.5.*

*Fig.6.*

COATED →